# FASCICULE DE BREVET EUROPEEN

(11) **EP 1 044 721 B1**
(45) Date de publication et mention de la délivrance du brevet: **05.04.2006**
(21) Numéro de dépôt: 00400946.0
(22) Date de dépôt: 06.04.2000
(51) Int. Cl.: B01J 29/04, C10G 47/16

(54) **Phyllosilicate 2:1 dioctaédrique ponte à grande distance réticulaire de type montmorillonite, catalyseur et procédé de conversion**
Verbrücktes 2:1 dioctaedrisches Monmorillonitphylosilikat mit grossem Gitterabstand, Katalysator und Verfahren zur Umwandlung
Pillard 2:1 dioctaedric phylosilicate of the type montmorillonite having a large reticular distance, catalyst and conversion process

(30) Priorité: 12.04.1999 FR 9904856
(43) Date de publication de la demande: 18.10.2000
(73) Titulaire: Institut Français du Pétrole, 92852 Rueil-Malmaison Cedex (FR)
(72) Inventeur: Lacombe, Sylvie, 92500 Rueil Malmaison (FR); Brendle, Jocelyne, 68270 Wittenheim (FR); Cseri, Tivadar, 92400 Courbevoie (FR); Le Dred, Ronan, 68400 Riedesheim (FR)

(56) Documents cités:
- WO-A-88/06488
- WO-A-88/06614
- WO-A-97/49488
- DE-A- 4 242 828
- US-A- 4 666 877

## Description

La présente invention concerne des phyllosilicates 2:1 dioctaédriques de type montmorillonite, par exemple naturels activés ou obtenus par synthèse, ladite synthèse étant éventuellement effectuée en milieu fluorure en présence de l'acide fluorhydrique et/ou d'une autre source d'anions fluorure, lesdits phyllosilicates étant pontés et présentant une grande distance réticulaire, la distance réticulaire représentée par d₀₀₁ étant la somme de l'épaisseur d'un feuillet et de l'espacement interfoliaire.

L'invention concerne également un procédé de préparation pour obtenir ledit phyllosilicate.

Ces phyllosilicates peuvent entrer dans la composition de catalyseurs utilisés pour l'hydrocraquage de charges hydrocarbonées.

La présente invention concerne également un catalyseur comprenant au moins un phyllosilicate 2:1 dioctaédrique de type montmorillonite, par exemple naturel activé, c'est-à-dire par exemple traité à l'acide, ou synthétisé, éventuellement en milieu fluorure (en présence de l'acide fluorhydrique et/ou d'une autre source d'anions fluorure) puis ponté, ledit phyllosilicate présentant une grande distance réticulaire (la distance réticulaire étant la somme de l'épaisseur d'un feuillet et de l'espacement interfoliaire) le catalyseur comprenant également au moins une matrice et éventuellement au moins une zéolite Y de structure faujasite. L'invention concerne également un procédé de conversion de charges hydrocarbonées utilisant ce catalyseur, en particulier un procédé d'hydrocraquage.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 m².g⁻¹ généralement) présentant une acidité superficielle, telles que les alumines halogénées (chlorées ou fluorées notamment), les combinaisons d'oxydes de bore et d'aluminium, les silices-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que chrome, molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs très actifs mais présentant une mauvaise sélectivité en distillats moyens. Il est donc possible, en choisissant judicieusement chacune des fonctions, d'ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter, et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont utilisés pour produire des distillats moyens de très bonne qualité, encore, lorsque leur acidité est très faible, des bases huiles.

Dans les supports peu acides, on trouve la famille des silice-alumines amorphes. Beaucoup de catalyseurs du marché de l'hydrocraquage sont constitués de silice-alumine associée, soit à un métal du groupe VIII soit, de préférence quand les teneurs en poisons hétéroatomiques (par exemple S, N et métaux lourds) de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Le document WO 88 06614 A décrit un phyllosilicate 2:1 dioctaédrique de type montmorillonite, un catalyseur comprenant ce phyllosilicate et un procédé pour la conversion d'hydrocarbures utilisant ce catalyseur. Cependant, il est utilisé un phyllosilicate comprenant des piliers à base d'un élément choisi parmi Al; Zr et Cr ou des combinaisons de Al ou Zr avec Si.
Le document WO 88 06488 A décrit un phyllosilicate 2:1 dioctaédrique de type montmorillonite, un catalyseur comprenant ce phyllosilicate et un procédé pour la conversion d'hydrocarbures utilisant ce catalyseur. Cependant, il est utilisé un phyllosilicate comprenant des piliers à base d'un élément choisi parmi Al et Zr et le phyllosilicate peut contenir du fluor.
Le document EP-A-0962250 décrit un phyllosilicate 2:1 dioctaédrique quelconque, dont la distance réticulaire est d'au moins 2.0x10-9 m et comprenant dans l'espace interfoliaire des piliers choisis parmi SiO2, Al2O3, TiO2, ZrO2, V2O5.

Les travaux de recherche effectués par le demandeur l'ont conduit à montrer que, de façon surprenante, un catalyseur contenant au moins un phyllosilicate 2:1 dioctaédrique de type montmorillonite, par exemple naturel activé, c'est-à-dire par exemple traité à l'acide, ou synthétisé, éventuellement en milieu fluorure (en présence de l'acide HF et/ou d'une autre source d'anions fluorure), puis ponté au silicium seul (de préférence par la méthode ici décrite) associé éventuellement à une zéolithe Y de structure faujasite, permet d'améliorer les performances en hydrocraquage par rapport aux catalyseurs connus dans l'art antérieur.

La présente invention concerne plus précisément un phyllosilicate 2:1 dioctaédrique de type montmorillonite dont la distance réticulaire représentée par d₀₀₁ est au moins égale à 2,0 x 10⁻⁹m et comprenant dans l'espace interfoliaire des piliers constitués de SiO₂. Eventuellement, il contient du fluor.

Selon la présente invention, ces phyllosilicates 2:1 dioctaédriques, (éventuellement préalablement préparés en milieu fluorure en présence de l'acide HF et/ou d'une autre source d'anions fluorures) pontés présentent une distance réticulaire d₀₀₁ au moins égale à 2,0 x 10⁻⁹ m, de manière préférée au moins égale 2,65 x 10⁻⁹ m et de manière encore plus préférée supérieure à 2,8 x 10⁻⁹ m ou encore à 3,0 x 10⁻⁹ m ; des distances au moins égale à 3,3 x 10⁻⁹ m peuvent être atteintes notamment dans le cas de piliers SiO₂ ou SiO₂ + autres oxydes. Elle est généralement inférieure ou égale à 6,0 x 10⁻⁹ m, de préférence à 5,0 x 10⁻⁹ m. La distance réticulaire, représentée par d₀₀₁, représente la somme de l'épaisseur d'un feuillet et de l'espacement interfoliaire. Cette valeur est directement accessible par la méthode classique de diffraction des rayons X sur poudre orientée.

L'invention concerne également un procédé pour la préparation desdits phyllosilicates de type montmorillonite dans lequel le phyllosilicate est mis en suspension dans une solution d'un agent tensio-actif, puis après séparation du solide de la solution, le phyllosilicate est mis au contact d'un mélange comprenant au moins une amine primaire ou secondaire et au moins un alkoxyde de Si.

Les phyllosilicates 2:1 dioctaédriques sont des minéraux qui résultent de l'empilement de feuillets élémentaires. Bien que les liaisons chimiques entre les éléments de la structure des phyllosilicates soient ionocovalentes, elles seront supposées ioniques, afin de simplifier la description.

A partir d'une représentation où les ions O²⁻ sont dans un plan au contact les uns des autres, il est possible d'obtenir un plan représentant une cavité hexagonale, dit plan hexagonal, en retirant dans une rangée sur deux d'ions O²⁻, un ion O²⁻ sur deux.

La structure d'une phyllite peut être représentée simplement à partir d'arrangements de plans hexagonaux d'ions O²⁻ et de plans compacts d'ions O²⁻ et OH-. Les ions OH remplissent les cavités des plans hexagonaux d'ions O²⁻. La superposition de deux plans compacts encadrés de part et d'autre par un plan hexagonal permet de définir une couche octaédrique (O) entre deux couches tétraédriques (T) d'où la dénomination de feuillets TOT.

Un tel arrangement, aussi dénommé 2:1, permet de définir un plan de cavités octaédriques situé dans la couche octaédrique entre deux plans de cavités tétraédriques, un dans chaque couche tétraédrique. Chaque tétraèdre a un ion O²⁻ commun avec la couche octaédrique et chacun des trois autres ions O²⁻ est partagé avec un autre tétraèdre de la même couche tétraédrique.

La maille cristalline est ainsi constituée de 6 cavités octaédriques ayant de part et d'autre 4 cavités tétraédriques. Un tel arrangement correspond dans le cas d'une phyllite constituée des éléments Si, Al, O, H à la formule idéale Si₈ (Al_{4 2}) O₂₀ (OH)₄, Les cavités tétraédriques contiennent l'élément silicium, les cavités octaédriques l'élément aluminium mais dans ce cas une cavité octaédrique sur 3 est vide (□). Un tel ensemble est électriquement neutre. On utilise souvent la demi-maille, qui a pour formule :

Si₄(Al₂ÿ)O₁₀(OH)₂

Dans le cas des phyllosilicates de type montmorillonite l'élément aluminium octaédrique est substitué partiellement par un élément divalent. Cette substitution confère des charges négatives à l'édifice. Celles-ci entraînent l'existence de cations de compensation échangeables situés dans l'espace interfoliaire. L'épaisseur de l'espace interfoliaire dépend de la nature des cations de compensation et de leur état d'hydratation. Cet espace est d'ailleurs capable d'accueillir d'autres espèces chimiques comme de l'eau, des amines, des sels, des alcools, des bases, etc....

Les phyllosilicates selon l'invention sont des phyllosilicates 2:1 dioctaédriques de type montmorillonite dont les caractéristiques sont données ci-après, dans lesquels des piliers ont été introduits dans l'espace interfoliaire (les piliers étant SiO₂) de façon à atteindre une distance réticulaire d₀₀₁ d'au moins 2,0 x 10⁻⁹m.

La formule chimique générale (pour une demi-maille) des phyllosilicates 2:1 dioctaédriques de type montmorillonite de départ, avant pontage, est la suivante :

M^{m+}_{x/m} (Si₄ (T_{(2-X)} Mgₓÿ) O₁₀ (OH)_{(2-y)} F_{y} )^{x-}

où
- T représente un élément choisi dans l'ensemble formé par les éléments du groupe IIIA (tels que par exemple B, AI, Ga) et le fer, le manganese, le chrome, le titane, le vanadium.
- M est au moins un cation de compensation choisi dans le groupe formé par les cations des éléments des groupes IA, IIA et VIII, les cations organiques contenant de l'azote, le cation ammonium, les cations des terres rares. Dans le cas où le phyllosilicate 2:1 dioctaédrique de type montmorillonite est obtenu par synthèse, le cation est issu du milieu réactionnel ou introduit par au moins un procédé d'échange. Avantageusement, le cation issu du milieu réactionnel est choisi dans le groupe formé par les alcalins (excepté le lithium), le cation ammonium (NH₄⁺), les cations organiques contenant de l'azote (parmi lesquels les alkylammonium et les arylammonium) et les cations organiques contenant du phosphore (parmi lesquels les alkylphosphonium et les arylphosphonium). M peut aussi être un cation de compensation introduit par échange ionique post-synthèse ou par échange ionique sur la montmorillonite naturelle éventuellement activé. Ce cation M est choisi dans le groupe formé par les cations des élèments des groupes lA, IIA et VIII de la classification périodique des élèments, les cations des terres rares (cations d'élèments de numéro atomique de 57 à 71 inclus), les cations organiques contenant de l'azote (parmi lesquels les alkylammonium et les arylammonium) et le cation ammonium.
- m est la valence du cation M,
- x est un nombre supérieur à 0 et inférieur à 2, de préférence entre 0,1 et 0,8;
- y un nombre compris entre 0 et 2 ; si le phyllosilicate contient du fluor, y est supérieur à 0
- et ÿ représente une cavité octaédrique.

Le phyllosilicate 2 :1 dioctaédrique utilisé à l'état naturel est de manière préférentielle activé, par exemple par un traitement à l'acide tel que par exemple HNO₃, HCl, H₂SO₄, H₃PO₄, etc..., entre 20 et 200°C, à une pression située entre la pression atmosphérique et 20 bar.
Le diagramme de diffraction des rayons X du phyllosilicate 2:1 dioctaédrique avant pontage est caractérisé par la présence des raies suivantes :
- une raie caractérisant la d₀₆₀ égale à 1,49 ± 0,01 x 10⁻¹⁰ m.
- au moins une réflexion 001 telle que d₀₀₁ soit égal 1,25 ± 0,3 x 10⁻⁹ m suivant la nature du cation de compensation et son état d'hydratation à l'humidité considérée.

Ces phyllosilicates 2:1 dioctaédriques sont pontés par exemple par un procédé comprenant les étapes suivantes :
- le phyllosilicate 2:1 dioctaédrique est mis en suspension dans une solution d'un agent tensio-actif dont la concentration varie entre 0,01 mole/litre et 1 mole/litre de préférence entre 0,05 et 0,7 mole/litre. Les agents tensio-actifs utilisables dans cette étape, sont de nature anionique, tels que à titre d'exemples non limitatifs les alkylsulfates et les alkylsulfonates, ou bien cationique parmi lesquels on peut citer les halogénures ou hydroxydes de tétralkylammonium tels que le chlorure de cétyltriméthylammonium ou bien encore des alkylammonium géminés.
   A titre d'exemple, sont utilisables le bromure d'hexadecyltriméthylammonium, le bromure d'éthylhexadecyldimethylammonium, le bromure d'octadecyltriméthyl ammonium, le bromure de dodecyltriméthylammonium, le bromure de didodecyldimethylammonium. On peut également employer des tensio-actifs neutres, tels que, par exemple, le triton X-100 ou les polyéthylènes oxydes (POE).
   Après un temps de contact, durant lequel le milieu est agité, compris entre 5 minutes et 12 heures et de préférence entre 15 minutes et 6 heures et de manière encore plus préférée entre 15 minutes et 3 heures, l'ensemble est filtré puis lavé à l'eau distillée puis enfin séché sous air ou gaz inerte à une température comprise entre 40 et 150°C, pour une durée comprise entre 5 minutes et 24 heures et de préférence entre 30 minutes et 12 heures.
   Dans le cas où le phyllosilicate n'est pas sous forme ammonium, il pourra subir préalablement tout traitement connu de l'homme de l'art de manière à obtenir le phyllosilicate 2:1 dioctaédrique majoritairement sous sa forme ammonium. On peut citer à titre d'exemple, non limitatif, de traitement pour réaliser cette transformation les échanges ioniques par des solutions aqueuses d'un sel d'ammonium (nitrate d'ammonium et/ou chlorure d'ammonium ).
- le phyllosilicate 2:1 dioctaédrique traité selon le mode opératoire décrit dans l'étape précédente est ensuite mis au contact d'un mélange comprenant :
   - i) au moins une amine primaire du type RNH₂ ou d'une amine secondaire R'RNH, où R et R' sont choisis avantageusement parmi l'ensemble formé par les groupements carbonés, alkyl, iso-alkyl, napthényl, aromatique substitué ou non par d'autres groupements et pouvant contenir de 1 à 16 atomes de carbone,
   - ii) au moins un alkoxyde de silicium, de formule générale M(OR)n, où M est le silicium n le degré de valence dudit élément et R un groupement choisi avantageusement dans l'ensemble formé par les groupes alkyls, iso-alkyls, napthényls et aromatiques substitués ou non. Les différents groupes -OR peuvent être identiques ou différents selon la nature du groupe R choisi dans l'ensemble défini ci-dessus.
      L'ensemble est laissé en contact, de préférence sous agitation durant une durée comprise entre 5 minutes et 12 heures et de préférence entre 5 minutes et 8 heures.
   - iii) le phyllosilicate 2:1 dioctaédrique ainsi ponté est ensuite filtré puis séché sous air ou sous gaz inerte à une température comprise entre 40 et 150°C, pour une durée comprise entre 5 minutes et 24 heures et de préférence entre 30 minutes et 12 heures.

De façon classique, après le séchage, le phyllosilicate est avantageusement soumis à une calcination en élevant la température, la température pouvant aller jusqu'à 800°C, et de préférence comprise entre 300-800°C, et encore plus avantageusement entre 400et 800°C. Le temps de calcination est variable. Généralement la température est maintenue entre 1-10h, de préférence 4-8h, puis on laisse le solide refroidir.

Ce procédé de pontage permet d'introduire simplement et rapidement des piliers SiO₂, dans l'espace interfoliaire des phyllosilicates 2:1 dioctaédriques.

Par rapport au phyllosilicate 2:1 dioctaédrique avant pontage, le phyllosilicate selon l'invention présente un spectre de diffraction des rayons X, qui permet d'évaluer la distance réticulaire d₀₀₁ qui a donc nettement augmenté à la valeur d'au moins 2,0 × 10⁻¹⁰ m. On observe également que la surface spécifique a augmenté, elle se situe alors généralement entre 200 et 1000 m² /g et de préférence entre 250 et 700 m²/g. Les raies d₀₆₀ en spectre RX sont conservées.

La présente invention concerne également un catalyseur comprenant au moins un phyllosilicate 2:1 dioctaédrique de type montmorillonite (tel que précédemment décrit) distance réticulaire est au moins égale à 2,0 x 10⁻⁹ m et comprenant des piliers constitués de SiO₂, au moins une matrice et éventuellement une zéolite Y.

Le catalyseur de la présente invention peut aussi renfermer une zéolithe Y de structure faujasite (Zéolite Molecular Sieves Structure, Chemistry and Uses, D.W. BRECK, J. WILLEY and Sons 1973) en particulier une zéolithe Y désaluminée de paramètre cristallin 24,24 à 24,55 x 10⁻¹⁰m. Parmi les zéolithes Y que l'on peut utiliser, on emploiera de préférence une zéolithe Y stabilisée, couramment appelée ultrastable ou USY soit sous forme au moins partiellement échangée avec des cations métalliques, par exemple des cations des métaux alcalino-terreux et/ou des cations de métaux de terres rares de numéro atomique 57 à 71 inclus, soit sous forme hydrogène.

Une zéolithe acide H-Y est particulièrement avantageuse et est caractérisée par différentes spécifications : un rapport molaire SiO₂/Al₂O₃ compris entre 8 et 70 et de manière préférée entre environ 12 et 40 ; une teneur en sodium inférieure à 0,15% poids déterminée sur la zéolithe calcinée à 1 100°C; un paramètre cristalllin de la maille élémentaire compris entre 24,55 x 10⁻¹⁰ m et 24,24 x 10⁻¹⁰ m et de manière préférée entre 24,38 x 10⁻¹⁰ m et 24,26 x 10⁻¹⁰ m ; une capacité CNa de reprise en ions sodium, exprimée en gramme de Na par 100 grammes de zéolithe modifiée, neutralisée puis calcinée, supérieure à environ 0,85 ; une surface spécifique déterminée par la méthode B.E.T supérieure à environ 400 m²/g et de préférence supérieure à 550 m²/g; une capacité d'adsorption de vapeur d'eau à 25°C pour une pression partielle de 2,6 Torrs (soit 34,6 MPa), supérieure à environ 6%, une répartition poreuse, déterminée par physisorption d'azote, comprenant entre 5 et 45% et de préférence entre 5 et 40% du volume poreux total de la zéolithe contenu dans des pores de diamètre compris entre 20 x 10⁻¹⁰ m et 80 x 10⁻¹⁰m, et entre 5 et 45% et de préférence entre 5 et 40 % du volume poreux total de la zéolithe contenu dans les pores de diamètre supérieur à 80 x 10⁻¹⁰m et généralement inférieur à 1000×10⁻¹⁰ , le reste du volume poreux étant contenu dans les pores de diamètre inférieur à 20 x 10⁻¹⁰ m.

Le catalyseur de la présente invention renferme également au moins une matrice habituellement amorphe ou mal cristallisée choisie par exemple dans le groupe formé par l'alumine, la silice, la magnésie, l'oxyde de titane, la zircone, les phosphates d'aluminium, de titane ou de zirconium, l'oxyde de bore, les combinaisons de deux au moins de ces composés et les combinaisons alumine-oxyde de bore.

La matrice est de préférence choisie dans le groupe formé par la silice, l'alumine, la magnésie, les combinaisons silice-alumine, les combinaisons silice-magnésie.

Le catalyseur de la présente invention renferme donc :
a) de 1 à 80 %, ou encore de 4 à 70%, de préférence de 10 à 60 % et de manière encore plus préférée de 15 à 50 % en poids d'au moins un phyllosilicate 2:1 dioctaédrique et ponté.
b) de 0 (ou 0,1) à 30%, de préférence de 0 (ou 0,1%) à 20 % et de manière encore plus préférée de 0 (ou 0,1) à 10 % d'au moins une zéolithe Y de structure faujasite, forme hydrogène, de préférence ayant les caractéristiques données ci-avant.
c) de 1 à 99% pds d'au moins une matrice définie ci-avant.

Le catalyseur de la présente invention peut être préparé par toutes les méthodes bien connues de l'homme du métier. Une des méthodes préférées dans la présente invention consiste à malaxer le phyllosilicate 2:1 dioctaédrique ponté et éventuellement une zéolithe Y dans un gel humide d'alumine pendant quelques dizaines de minutes, puis à passer la pâte ainsi obtenue à travers une filière pour former des extrudés de diamètre compris entre 0,4 et 4 mm. Le catalyseur subit ensuite généralement une calcination à une température comprise entre environ 250 et 600°C, de préférence précédée d'un séchage, par exemple à l'étuve, à une température comprise entre la température ambiante et 250°C.

Généralement, le catalyseur renferme également au moins un élément catalytique, par exemple un métal ayant une fonction hydro-déshydrogénante. La fonction hydro-deshydrogénante est généralement assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et/ou VIII est comprise entre 1 et 40 % en poids et de préférence entre 3 et 40 %, avantageusement entre 8 et 40%, voire 10 à 40% et mieux 10-30% en poids, et le rapport pondéral exprimé en oxyde métallique de métal (ou métaux) du groupe VI sur métal (ou métaux) du groupe VIII est compris entre 1,25 et 20 et de préférence entre 2 et 10. De plus, ce catalyseur peut contenir du phosphore. La teneur en phosphore, exprimée en concentration en oxyde de phosphore P₂O₅, sera inférieure à 15 % en poids et de préférence inférieure à 10 % en poids.

La fonction hydrogénante telle qu'elle a été définie précédemment (métaux du groupe VIII ou association d'oxydes de métaux des groupes VI et VIII) peut être introduite dans le catalyseur à divers niveaux de la préparation et de diverses manières.

Elle peut être introduite en partie seulement (cas des associations d'oxydes de métaux des groupes VI et VIII) ou en totalité au moment du malaxage du phyllosilicate 2:1 dioctaédrique, ponté, avec le gel d'oxyde choisi comme matrice. Elle peut être introduite par une ou plusieurs opérations d'échange ionique sur le support calciné constitué du phyllosilicate 2:1 dioctaédrique et éventuellement ponté et dispersé dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VI (notamment le molybdène ou le tungstène) ont été préalablement introduits au moment du malaxage du support. Elle peut enfin être introduite par une ou plusieurs opérations d'imprégnation du support calciné constitué d'un phyllosilicate 2:1 dioctaédrique et ponté et de la matrice, par des solutions contenant les précurseurs des oxydes de métaux des groupes VI et/ou VIII, les précurseurs des oxydes de métaux de groupe VIII étant de préférence introduits après ceux du groupe VI ou en même temps que ces derniers.

Dans le cas où les oxydes des métaux sont introduits en plusieurs imprégnations des sels précurseurs correspondants, une étape de calcination intermédiaire du catalyseur devra être effectuée à une température comprise entre 250 et 600 °C.

L'imprégnation du molybdène peut être facilitée par ajout d'acide phosphorique dans les solutions de paramolybdate d'ammonium.

Les catalyseurs ainsi obtenus sont utilisés de façon générale pour la conversion d'hydrocarbures, et en particulier pour l'hydrocraquage. Ils présentent en hydrocraquage, par rapport aux catalyseurs zéolitiques de l'art antérieur, une sélectivité améliorée pour la production de distillats moyens de très bonne qualité.

Les charges employées dans le procédé sont des gas-oils, des gas-oils sous vide, des résidus désasphaltés ou hydrotraités ou équivalents. Ce peut être des coupes lourdes constituées d'au moins 80 % en volume de composés dont les points d'ébullition sont situés entre 350 et 580 °C (c'est à dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids. Les conditions de l'hydrocraquage telles que, température, pression, taux de recyclage d'hydrogène, vitesse volumique horaire, pourront être très variables en fonction de la nature de la charge, de la qualité des produits désirés, des installations dont dispose le raffineur.

Les températures sont en général supérieures à 230 °C et souvent comprises entre 300°C et 480°C, de préférence inférieures à 450°C. La pression est supérieure ou égale à 2 MPa et en général supérieure à 3 MPa voire 10 MPa. Le taux de recyclage d'hydrogène est au minimum de 100 et souvent compris entre 260 et 3000 litres d'hydrogène par litre de charge. La vitesse volumique horaire est comprise en général entre 0,2 et 10 h⁻¹.

Les exemples suivants illustrent la présente invention sans toutefois en limiter la portée.

### Exemple n°1

### Montmorillonite pontée Si

3g de montmorillonite naturelle activée K10 fournie par Prolabo, dont la surface spécifique BET est de 257 m²/g, sont mis en suspension dans une solution composée de 42g de chlorure d'hexadécyltriméthylammonium (C₁₆TMA-Cl) 0,75M et de 150 mL d'eau distillée. Après 2h30 min d'agitation à température ambiante, l'ensemble est filtré, lavé avec 200 mL d'eau distillée puis séché à 60 °C durant 8h. 1g de cet échantillon est ensuite mis en suspension dans un mélange composé de 1,12g d'octylamine (C₈H₁₇NH₂) et de 7,54g de tétraéthylorthosilicate d'éthyle Si(OC₂H₅)₄. Après 30 min d'agitation à température ambiante, l'ensemble est filtré puis directement séché à 60°C pendant 8 h. Le matériau est ensuite calciné à 500 °C durant 4h sous air. La perte en masse consécutive à la calcination est de 29%. La périodicité d₀₀₁ atteint alors une valeur de 29,5.10⁻¹⁰ m ( 2,95 nm) .L'échantillon présente une coloration brune foncée. Un nouveau traitement thermique est réalisé à 650°C sous air pendant 4h, conduisant à l'oxydation totale de la matière organique. La perte en masse entre 500 et 650 °C est de 9 %. La dₒₒ₁ du produit est de 32,0 10⁻¹⁰ m ( 3,20 nm) et sa surface spécifique BET est de 577 m².g⁻¹. La périodicité est de 41,8.10⁻¹⁰ m (4,18 nm) après 4h de calcination à 750 °C sous air.

### Exemple n°2

### Montmorillonite pontée Si

3g de montmorillonite naturelle activée K10 fournie par Prolabo, dont la surface spécifique BET est de 257 m²/g, sont mis en suspension dans une solution composée de 42g de chlorure d'hexadécyltriméthylammonium (C₁₆TMA-Cl) 0,75M et de 150 mL d'eau distillée. Après 2h30 min d'agitation à température ambiante, l'ensemble est filtré, lavé avec 200 mL d'eau distillée puis séché à 60 °C durant 8h. 1g de cet échantillon est ensuite mis en suspension dans un mélange composé de 0,56g d'octylamine (C₈H₁₇NH₂) et de 7,54g de tétraéthylorthosilicate d'éthyle Si(OC₂H₅)₄ Après 30 min d'agitation à température ambiante, l'ensemble est filtré puis directement séché à 60°C pendant 8 h. Le matériau est ensuite calciné à 500 °C durant 4h sous air. La perte en masse consécutive à la calcination est de 25%. La périodicité d₀₀₁ atteint alors une valeur de 37,8.10⁻¹⁰ m ( 3,78 nm) . Un nouveau traitement thermique est réalisé à 650°C sous air pendant 4h. La perte en masse entre 500 et 650 °C est de 6 %. La d₀₀₁ du produit est de 45,8. 10⁻¹⁰ m ( 4,58 nm) et sa surface spécifique BET est de 500 m².g⁻¹

### Exemple n°3

### Montmorillonite pontée Si

3g de montmorillonite naturelle activée K10 fournie par Prolabo, dont la surface spécifique BET est de 257 m²/g, sont mis en suspension dans une solution composée de 42g de chlorure d'hexadécyltriméthylammonium (C₁₆TMA-Cl) 0,75M et de 150 mL d'eau distillée. Après 2h30 min d'agitation à température ambiante, l'ensemble est filtré, lavé avec 200 mL d'eau distillée puis séché à 60 °C durant 8h. 1g de cet échantillon est ensuite mis en suspension dans un mélange composé de 0,56g d'octylamine (C₈H₁₇NH₂) et de 15,08g de tétraéthylorthosilicate d'éthyle Si(OC₂H₅)₄. Après 30 min d'agitation à température ambiante, l'ensemble est filtré puis directement séché à 60°C pendant 8 h. Le matériau est ensuite calciné à 500 °C durant 4h sous air. La perte en masse consécutive à la calcination est de 22%. La périodicité d₀₀₁ atteint alors une valeur de 27,7.10⁻¹⁰ m ( 2,77 nm) . Un nouveau traitement thermique est réalisé à 650°C sous air pendant 4h. La perte en masse entre 500 et 650 °C est de 8,7 %. La d₀₀₁ du produit est de 30,4. 10⁻¹⁰ m ( 3,04 nm).

### Exemple n°4

### Montmorillonite pontée Si

3g de montmorillonite naturelle activée K10 fournie par Prolabo, dont la surface spécifique BET est de 257 m²/g, sont mis en suspension dans une solution composée de 21g de chlorure d'hexadécyltriméthylammonium (C₁₆TMA-Cl) 0,75M et de 75 mL d'eau distillée. Après 2h30 min d'agitation à température ambiante, l'ensemble est filtré, lavé avec 200 mL d'eau distillée puis séché à 60 °C durant 8h. 1g de cet échantillon est ensuite mis en suspension dans un mélange composé de 0,56g d'octylamine (C₈H₁₇NH₂) et de 7,54g de tétraéthylorthosilicate d'éthyle Si(OC₂H₅)₄. Après 30 min d'agitation à température ambiante, l'ensemble est filtré puis directement séché à 60°C pendant 8 h. Le matériau est ensuite calciné à 500 °C durant 4h sous air. La perte en masse consécutive à la calcination est de 24%. La périodicité d₀₀₁ atteint alors une valeur de 41,3.10⁻¹⁰ m ( 4,13 nm) . Un nouveau traitement thermique est réalisé à 650°C sous air pendant 4h. La perte en masse entre 500 et 650 °C est de 8 %. La d₀₀₁ du produit est de 42,0. 10⁻¹⁰ m ( 4,20 nm) et sa surface spécifique BET est de 518 m².g⁻¹.

### Exemple n°5

### Montmorillonite pontée Si

3g de montmorillonite naturelle activée K10 fournie par Prolabo, dont la surface spécifique BET est de 257 m²/g, sont mis en suspension dans 42g de chlorure d'hexadécyltriméthylammonium (C₁₆TMA-Cl) 0,75M. Après 2h30 min d'agitation à température ambiante, l'ensemble est filtré, lavé avec 200 mL d'eau distillée puis séché à 60 °C durant 8h. 1g de cet échantillon est ensuite mis en suspension dans un mélange composé de 1,12g d'octylamine (C₈H₁₇NH₂) et de 7,54g de tétraéthylorthosilicate d'éthyle Si(OC₂H₅)₄. Après 30 min d'agitation à température ambiante, l'ensemble est filtré puis directement séché à 60°C pendant 8 h. Le matériau est ensuite calciné à 500 °C durant 4h sous air. La perte en masse consécutive à la calcination est de 29%. La périodicité d₀₀₁ atteint alors une valeur de 46,8.10⁻¹⁰ m (4,68 nm) . Un nouveau traitement thermique est réalisé à 650°C sous air pendant 4h. La perte en masse entre 500 et 650 °C est de 8 %. La d₀₀₁ du produit est de 40,1. 10⁻¹⁰ m ( 4,01 nm) et sa surface spécifique BET est de 543 m².g⁻¹. Une calcination ultérieure de cet échantillon à 750 °c conduit à un matériau présentant une d₀₀₁, de 37,2. 10⁻¹⁰ m ( 3,72 nm).

### Exemple n°6

### Montmorillonite pontée Si

1,5g de montmorillonite naturelle activée KSF fournie par Prolabo, dont la surface spécifique BET est de 13 m²/g, sont mis en suspension dans une solution composée de 21g de chlorure d'hexadécyltriméthylammonium (C₁₆TMA-Cl) 0,75M et de 75 mL d'eau distillée . Après 2h30 min d'agitation à température ambiante, l'ensemble est filtré, lavé avec 200 mL d'eau distillée puis séché à 60 °C durant 8h. 1g de cet échantillon est ensuite mis en suspension dans un mélange composé de 0,56g d'octylamine (C₈H₁₇NH₂) et de 7,54g de tétraéthylorthosilicate d'éthyle Si(OC₂H₅)₄. Après 30 min d'agitation à température ambiante, l'ensemble est filtré puis directement séché à 60°C pendant 8 h. Le matériau est ensuite calciné à 500 °C durant 4h sous air. La perte en masse consécutive à la calcination est de 24%. La périodicité d₀₀₁ atteint alors une valeur de 37,2. 10⁻¹⁰ m ( 3,72 nm). Un nouveau traitement thermique est réalisé à 650°C sous air pendant 4h. La perte en masse entre 500 et 650 °C est de 6 %. La d₀₀₁ du produit est de 36,9. 10⁻¹⁰ m ( 3,69 nm) et sa surface spécifique BET est de 506 m².g⁻¹.

### Exemple n°7 (comparatif)

### Montmorillonite pontée Si/Zr

15g de montmorillonite naturelle activée K10 fournie par Prolabo, dont la surface spécifique BET est de 257 m²/g, sont mis en suspension dans une solution composée de 210g de chlorure d'hexadécyltriméthylammonium (C₁₆TMA-Cl) 0,75M et de 75 mL d'eau distillée. Après 2h30 min d'agitation à température ambiante, l'ensemble est filtré, lavé avec 200 mL d'eau distillée puis séché à 60 °C durant 8h. 2g de cet échantillon est ensuite mis en suspension dans un mélange composé de 1,12 g d'octylamine (C₈H₁₇NH₂), de 15,08g de tétraéthylorthosilicate d'éthyle Si(OC₂H₅)₄ et de 0,59g d'isopropoxyde de zirconium Zr(OC₃H₇). Après 30 min d'agitation à température ambiante, l'ensemble est filtré puis directement séché à 60°C pendant 8 h. Le matériau est ensuite calciné à 650 °C durant 4h sous air. La perte en masse consécutive à la calcination est de 26%. La périodicité d₀₀₁ atteint alors une valeur de 43,6. 10⁻¹⁰ m (4,36 nm) et la surface spécifique BET est de 510 m².g⁻¹.

## Revendications

1. Phyllosilicate 2:1 dioctaédrique de type montmorillonite dont la distance réticulaire est au moins égale à 2,00 x 10⁻⁹ m et comprenant dans l'espace interfoliaire des piliers constitués de SiO₂.

2. Phyllosilicate 2:1 dioctaédrique selon la revendication 1 contenant du fluor.

3. Phyllosilicate 2:1 dioctaédrique selon l'une des revendications précédentes, dont la distance réticulaire est au moins égale à 2,65 x 10⁻⁹m.

4. Phyllosilicate 2:1 dioctaédrique selon l'une des revendications précédentes, dont la distance réticulaire est au moins égale à 3,0 x 10⁻⁹m.

5. Phyllosilicate 2:1 dioctaédrique selon l'une des revendications précédentes, dont la distance réticulaire est au moins égale à 3,3 x 10⁻⁹m.

6. Phyllosilicate 2:1 dioctaédrique selon l'une des revendications précédentes, dont la distance réticulaire est d'au plus 6,0 x 10⁻⁹m.

7. Procédé de préparation d'un phyllosilicate 2:1 dioctaédrique de type montmorillonite selon l'une des revendications 1 à 6, dont la distance réticulaire est au moins égale à 2,00 x 10⁻⁹m dans lequel le phyllosilicate est mis en suspension dans une solution d'un agent tensio-actif, puis après séparation du solide de la solution, le phyllosilicate est mis au contact d'un mélange comprenant au moins une amine primaire ou secondaire et au moins un alkoxyde de Si.

8. Procédé selon la revendication 7, dans lequel le phyllosilicate mis en suspension est sous forme ammonium (NH₄⁺).

9. Procédé selon la revendication 7 ou 8, dans lequel la solution d'agent tensio-actif est à une concentration de 0,01 mole/litre à 1 mole/litre.

10. Procédé selon l'une des revendications 7 à 9, dans lequel l'amine primaire RNH₂ ou l'amine secondaire R'RNH ont des radicaux R et R' choisis dans le groupe formé par les radicaux alkyl, iso-alkyl, naphtényl, aromatique subsitutés ou non, R et R' ayant de 1 à 16 atomes de carbone, et procédé dans lequel l'alkoxyde M(OR)n de l'élément M présente un radical R choisi dans le groupe formé par les radicaux alkyl, iso-alkyl, naphtényl, aromatique substitués ou non, ayant de 1 à 16 atomes de carbone.

11. Catalyseur comprenant au moins un phyllosilicate 2:1 dioctaédrique selon l'une des revendications 1 à 6 ou préparé selon l'une des revendications 7 à 10, au moins une matrice et éventuellement une zéolithe Y.

12. Catalyseur selon la revendication 11 comprenant de
. 1-80% poids d'au moins un phyllosilicate 2:1 dioctaédrique
. de 0-30% poids d'au moins une zéolithe Y,
. de 1-99% poids d'au moins une matrice.

13. Catalyseur selon l'une des revendications 11 à 12, comprenant en outre au moins un élément catalytique.

14. Catalyseur selon la revendication 13, dans lequel l'élément catalytique est un élément hydro-déshydrogénant.

15. Catalyseur selon l'une des revendications 11 à 14, comprenant en outre du phosphore.

16. Catalyseur selon l'une des revendications 11 à 15, dans lequel la matrice est choisie dans le groupe formé par l'alumine, la silice, la magnésie, l'oxyde de titane, le zircone, les phosphates de titane, les phosphates de zirconium, l'oxyde de bore.

17. Catalyseur selon l'une des revendications 11 à 16, comprenant un phyllosilicate 2:1 dioctaédrique contenant du fluor.

18. Catalyseur selon l'une des revendications 11 à 17, comprenant une zéolite Y désaluminée.

19. Procédé pour la conversion d'hydrocarbures avec un catalyseur selon l'une des revendications 11 à 18.

20. Procédé selon la revendication 19 pour l'hydrocraquage avec un catalyseur comprenant également au moins un élément hydro-déshydrogénant.

21. Procédé selon la revendication 20, opérant à plus de 230°C, sous une pression d'au moins 2MPa et avec une VVH de 0,2-10h⁻¹.

22. Procédé selon l'une des revendications 20 à 21 opérant sur des gazoles, gazoles sous vide, résidus désasphaltés ou résidus hydrotraités.

## Patentansprüche

1. Dioctaedrisches 2:1 Phyllosilikat vom Montmorillonittyp, dessen Gitterabstand wenigstens gleich 2,00 x 10⁻⁹ m ist und das im Raum zwischen den Schichten Pfeiler umfasst, die aus SiO₂ bestehen.

2. Dioctaedrisches 2:1 Phyllosilikat nach Anspruch 1, das Fluor enthält.

3. Dioctaedrisches 2:1 Phyllosilikat nach einem der vorhergelaenden Ansprüche, dessen Gitterabstand wenigstens gleich 2,65 x 10⁻⁹ m ist.

4. Dioctaedrisches 2:1 Phyllosilikat nach einem der vorhergehenden Ansprüche, dessen Gitterabstand wenigstens gleich 3,0 x 10⁻⁹ m ist.

5. Dioctaedrisches 2:1 Phyllosilikat nach einem der vorhergehenden Ansprüche, dessen Gitterabstand wenigstens gleich 3,3 x 10⁻⁹ m ist.

6. Dioctaedrisches 2:1 Phyllosilikat nach einem der vorhergehenden Ansprüche, dessen Gitterabstand höchstens 6,0 x 10⁻⁹ m ist.

7. Verfahren zur Herstellung eines dioctaedrischen 2:1 Phyllosilikats vom Montmorillonittyp nach einem der Ansprüche 1 bis 6 mit einem Gitterabstand von wenigstens gleich 2,00 x 10⁻⁹ m, in welchem das Phyllosilikat suspendiert wird in einer Lösung eines Tensids und dann nach Trennung des Feststoffs von der Lösung das Phyllositikat kontaktiert wird mit einem Gemisch, das wenigstens ein primäres oder sekundäres Amin und wenigstens ein Si-Alkoxyd umfasst.

8. Verfahren nach Anspruch 7, bei dem das Phyllosilikat in Ammoniumform (NH4⁺) suspendiert wird.

9. Verfahren nach Anspruch 7 oder 8, bei dem die Tensidlösung eine Konzentration von 0,01 mol/Liter bis 1 mol/Liter hat.

10. Verfahren nach einem der Ansprüche 7 bis 9, bei dem das primäre Amin RNH₂ oder das sekundäre Amin R'RNH R- und R'-Reste hat, gewählt aus der Gruppe, die gebildet wird durch die Alkyl-, Isoalkyl-, Naphtyl-, ggf. substituierten Aromatenreste, wobei R und R' 1 bis 16 Kohlenstoffatome haben, und bei welchem Verfahren das Alkoxyd M(OR)n des Elements M einen R-Rest aufweist, gewählt aus der Gruppe, die gebildet wird durch die Alkyl-, Isoalkyl, Naphtyl-, ggf. substituierten Aromatenreste mit 1 bis 16 Kohlenstoffatomen.

11. Katalysator, umfassend wenigstens ein dioctaedrisches 2:1 Phyllositikat nach einem der Ansprüche 1 bis 6 oder hergestellt nach einem der Ansprüche 7 bis 10, wenigstens eine Matrix und ggf. einen Y-Zeclith.

12. Katalysator nach Anspruch 11, umfassend
- 1-80 Gew.-% wenigstens eines dioctaedrischen 2:1 Phyllosilikats,
- 0-30 Gew.-% wenigstens eines Y-Zeoliths,
- 1-99 Gew.-% wenigstens einer Matrix.

13. Katalysator nach einem der Ansprüche 11 bis 12, weiterhin umfassend wenigstens ein katalytisches Element.

14. Katalysator nach Anspruch 13, bei dem das katalytische Element ein hydrierendes-dehydrierendes Element ist.

15. Katalysator nach einem der Ansprüche 11 bis 14, weiterhin Phosphor umfassend.

16. Katalysator nach einem der Ansprüche 11 bis 15, bei dem die Matrix gewählt ist aus der Gruppe, die gebildet wird durch Aluminiumoxid, Siliziumoxid, Magnesiumoxid, Titanoxid, Zirkonerde, Titanphosphate, Zirkoniumphosphate, Boroxid.

17. Katalysator nach einem der Ansprüche 11 bis 16, umfassend ein dioctaedrisches 2:1 Phyllosilikat, das Fluor enthält.

18. Katalysator nach einem der Ansprüche 11 bis 17, umfassend einen desaluminierten Y-Zeolith.

19. Verfahren zur Kohlenwasserstoffumwandlung mit einem Katalysator nach einem der Ansprüche 11 bis 18.

20. Verfahren nach Anspruch 19 zum Hydrocracken mit einem Katalysator, der auch wenigstens ein hydrierendes-dehydrierendes Element umfasst.

21. Verfahren nach Anspruch 20, das bis auf 230°C unter einem Druck von wenigstens 2MPa und mit einer VVH von 0,2-^{10h-1} arbeitet.

22. Verfahren nach einem der Ansprüche 20 bis 21, das auf Dieselölen, Vakuumdieselölen, deasphaltierten Rückständen oder hydrierbehandelten Rückständen arbeitet

## Claims

1. A montmorillonite type 2:1 dioctahedral phyllosilicates with an interplanar spacing of at least 2.00 x 10⁻⁹ m and comprising, in the space between the sheets, SiO₂ pillars,

2. A 2:1 dioctahedral phyllosilicate according to claim 1, containing fluorine.

3. A 2:1 dioctahedral phyllosilicate according to any one of the preceding claims, in which the interplanar spacing is at least 2.65 x 10⁻⁹ m.

4. A 2:1 dioctahedral phyllosilicate according to any one of the preceding claims, in which the interplanar spacing is at least 3.0 x 10⁻⁹ m.

5. A 2:1 dioctahedral phyllosilicate according to any one of the preceding claims, in which the interplanar spacing is at least 3.3 x 10⁻⁹ m.

6. A 2:1 dioctahedral phyllosilicate according to any one of the preceding claims, in which the interplanar spacing is at most 6.0 x 10⁻⁹ m.

7. A process for preparing a montmorillonite type 2:1 dioctahedral phyllosilicate according to any one of the claims 1 to 6, of which the interplanar distance is at least 2.00 x 10⁻⁹ m in which the phyllosilicate is suspended in a solution of a surfactant then after separating the solid from the solution, the phyllosilicate is brought into contact with a mixture comprising at least one primary or secondary amine and at least one alkoxide of Si.

8. A process according to claim 7, in which the phyllosilicate is suspended in the ammonium (NH₄⁺) form.

9. A process according to claim 7 or claim 8, in which the concentration of the surfactant solution is 0.01 mole/lire to 1 mole/litre.

10. A process according to any one of claims 7 to 9, in which the primary amine RNH₂ or secondary amine R'RNH contains radicals R and R' selected from the group formed by alkyl, isoalkyl, naphthenyl, substituted or non substituted aromatic radicals, R and R' containing 1 to 16 carbon atoms, and in which process the alkoxide M(OR)ₙ of element M represents a radical R selected from the group formed by alkyl, isoalkyl, naphthenyl and substituted or non substituted aromatic radicals containing 1 to 16 carbon atoms.

11. A catalyst comprising at least one 2:1 dioctahedral phyllosilicate according to any one of claims 1 to 6 or prepared in accordance with any one of claims 7 to 10, at least one matrix and optionally a Y zeolite.

12. A catalyst according to claim 11, comprising:
• 1-80% by weight of at least one 2:1 dioctahedral phyllosilicate;
• 0-30% by weight of at least one Y zeolite;
• 1-99% by weight of at least one matrix.

13. A catalyst according to any one of claims 11 to 12, further comprising at least one catalytic element.

14. A catalyst according to claim 13, in which the catalytic element is a hydrodehydrogenating element.

15. A catalyst according to any one of claims 11 to 14, further comprising phosphorous.

16. A catalyst according to any one of claims 11 to 15, in which the matrix is selected from the group formed by alumina, silica, magnesia, titanium oxide, zirconia, titanium phosphates, zirconium phosphates and boron oxide.

17. A catalyst according to any one of claims 11 to 16, comprising a 2:1 dioctahedral phyllosilicate containing fluorine.

18. A catalyst according to any one of claims 11 to 17, comprising a dealuminated Y zeolite.

19. A process for converting hydrocarbons using a catalyst according to any one of claims 11 to 18.

20. A process according to claim 19 for hydrocracking using a catalyst also comprising at least one hydrodehydrogenating element.

21. A process according to claim 20, carried out at more than 230°C, at a pressure of at least 2 MPa and at an HSV of 0.2-10 h⁻¹.

22. A process according to claim 20 or claim 21, carried out on gas oils, vacuum gas oils, deasphalted residues or hydrotreated residues.
